# EUROPÄISCHE PATENTANMELDUNG

(11) **EP 1 712 860 A1**
(43) Veröffentlichungstag der Anmeldung: **18.10.2006**
(21) Anmeldenummer: 05007932.6
(22) Anmeldetag: 12.04.2005
(51) Int. Cl.: F27B 15/14, F27B 15/10, F23G 5/30, F23C 10/22, B01J 8/18, B01J 8/24

(54) **Optimierte Anordnung und Betrieb von Gaslanzen in einem Wirbelschichtofen**

(71) Anmelder: Lurgi Lentjes AG, 40549 Düsseldorf (DE)
(72) Erfinder: Hellwig, Axel, 47803 Krefeld (DE)
(74) Vertreter: Stenger, Watzke & Ring

(57) **Zusammenfassung**

Die vorliegende Erfindung betrifft ein Wirbelschichtofen mit einer Wandung, einem Anfahrbrenner, einem Wirbelbett, einem unterhalb des Wirbelbetts angeordneten Düsenboden und oberhalb des Düsenbodens am Innenumfang der Wandung verteilte Lanzen, die in das Wirbelbett münden und die zur Zufuhr von Zusatzbrennstoff in das Wirbelbett dienen, wobei jede Lanze im Betriebszustand eine Verbrennungszone mit einem im wesentlichen vorbestimmten Verbrennungszonendurchmesser um ihre Mündungsöffnung definiert, wobei die Anordnung und Anzahl der Lanzen derart gewählt ist, daß im Betriebszustand der Verbrennungszonendurchmesser 55 bis 100% des Abstands zwischen zwei Mündungsöffnungen benachbarter Lanzen entspricht.

## Beschreibung

Die vorliegende Erfindung bezieht sich auf einen Wirbelschichtofen, insbesondere auf einen stationären Wirbelschichtofen zur Verbrennung von Klärschlamm.

Unter der Bezeichnung "Klärschlamm" werden hier neben den städtischen Abwasserschlämmen auch wasserhaltige Industrie-Schlämme verstanden, wie beispielsweise Öl-Wasser-Emulsionen, Fett-Wasser-Emulsionen oder dergleichen.

Die Wirbelschichttechnologie beruht auf dem physikalischen Prinzip, daß Partikel zum Schweben gebracht werden können, wenn sie von unten mit Luft angeströmt werden. Praktisch wird dies umgesetzt, indem eine auf einem Düsenboden lose aufgeschüttete Schicht eines inerten Stoffes, wie beispielsweise Sand, von durch den Düsenboden aufwärts strömender Verbrennungsluft angeströmt und in einen Schwebe- bzw. Wirbelzustand gebracht wird, der auch Fluidisierung genannt wird. Die Vorteile der Wirbelschichttechnologie bestehen insbesondere darin, daß ein erheblich verbesserter Stoff- und Wärmeaustausch sowie eine gleichmäßige Verbrennung bei niedrigen Emissionswerten erzielt werden können.

Die stationäre Wirbelschicht besteht im wesentlichen aus einem zylindrischen Reaktionsraum, einem Düsenboden, über dem der inerte Stoff liegt, sowie einem Anfahrbrenner. Die Verbrennung erfolgt in einem Temperaturbereich von 850 bis 1050, bevorzugt 850 bis 950° C.

Eine der wichtigsten Voraussetzungen für die Gewährleistung einer sicheren Verbrennung von Klärschlamm in einer stationären Wirbelschicht ist eine ordnungsgemäße Kontrolle der Wirbelbettemperatur und eine gute Fluidisierung des Bettmaterials. Der entscheidende Parameter für eine gut funktionierende Wirbelschicht ist daher die eingetragene thermische Last. Der thermische Lastbereich ist eng begrenzt, da er das Luftvolumen, das zur Verbrennung benötigt wird, bestimmt und damit auch die Qualität der Fluidisierung des Bettmaterials sowie die Bettemperatur. Im allgemeinen sollte der thermische Lastbereich zwischen 80 und 100% liegen.

Dies setzt allerdings eine konstante Qualität des Klärschlammes voraus. Eine solche ist jedoch erfahrungsgemäß in der Praxis aufgrund von Trockensubstanz- und Heizwertschwankungen des Klärschlammes, also aufgrund von Schwankungen der thermischen Last des Klärschlammes nicht sicherzustellen.

Bei größeren Änderungen der thermischen Last des Klärschlammes, die unter anderem durch Schwankungen des Aschegehaltes und des Wassergehaltes des Klärschlammes bedingt sein können, wird der Bereich, in dem der Luftvolumenstrom sich ändern darf, um noch einen ordnungsgemäßen Betrieb des Wirbelschichtofens sicherzustellen, unter- bzw. überschritten. Wird der Bereich unterschritten, so kann es zum Kollabieren des Wirbelbettes kommen, da nicht ausreichend Luft für seine Aufrechterhaltung zur Verfügung gestellt wird. Wird er hingegen überschritten, so ist ein Austrag des Bettmaterials zu befürchten. Um die Klärschlammverbrennung auch in einem unteren Lastbereich betreiben zu können, wird deshalb versucht, die Temperatur im Wirbelbett und das Luftvolumen durch Zufeuerung von Zusatzbrennstoff oder sogenanntem Stützbrennstoff konstant zu halten. Dies erfolgt in begrenztem Umfang durch Luftvorwärmung, den Betrieb des Anfahrbrenners und den Betrieb der im Bereich des Wirbelbettes angeordneten und in dieses mündenden Lanzen.

Anfahrbrenner und Lanzen sind normalerweise für das Anfahren der Wirbelschichtfeuerung und den Warmehaltebetrieb der Wirbelschichtfeuerung ausgelegt, und nur in begrenztem Maße zum Ausgleich von Heizwertschwankungen tauglich.

Bei intensiver Nutzung des Anfahrbrenners kann es zur Überhitzung bzw. zu unerlaubten Temperaturwechseln im Anfahrbrennerbereich kommen.

Werden hingegen die Lanzen zur Stützfeuerung genutzt, führt dies sehr schnell zu einem Sauerstoffmangel und zu lokalen Überhitzungen des Bettmaterials in der Verbrennungszone des Stützbrennstoffes. Das durch die einzelnen Lanzen zuführbare Luftvolumen ist begrenzt. Werden nun die Lanzen zur Stützfeuerung verwendet, so kann das für ein ordnungsgemäßes Verbrennen des durch die Lanzen eingetragenen Stützbrennstoffes erforderliche Luftvolumen nicht vollständig bereitgestellt werden. Der Stützbrennstoff verbrennt aus Sauerstoffmangel nicht vollständig im Wirbelbett, wo die Energie benötigt wird, sondern unter anderem auch im Gasraum über dem Wirbelbett. Dies führt zu Überschreitungen der Freeboardtemperatur, also der Temperatur im Bereich oberhalb des Wirbelschichtbettes, weshalb Wasser zum Quenchen des Rauchgases eingedüst werden muß.

Es ist eine Aufgabe der vorliegenden Erfindung, einen Wirbelschichtofen und ein Verfahren zum Betreiben des Wirbelschichtofens zu schaffen, bei denen die oben genannten Probleme zumindest teilweise gelöst sind.

Diese Aufgabe wird gemäß der vorliegenden Erfindung durch einen Wirbelschichtofen nach Anspruch 1 und durch ein Verfahren zum Betreiben des erfindungsgemäßen Wirbelschichtofens nach Anspruch 4 gelöst.

Der erfindungsgemäße Wribelschichtofen umfaßt eine bevorzugt im wesentlichen zylindrisch oder rechteckig ausgebildete Wandung, einen Anfahrbrenner, ein Wirbelbett, einen unterhalb des Wirbelbetts angeordneten Düsenboden und oberhalb des Düsenbodens am Innenumfang der Wandung verteilte Lanzen, die in das Wirbelbett münden und die zur Zufuhr von Zusatzbrennstoff in das Wirbelbett dienen. Jede Lanze definiert im Betriebszustand eine Verbrennungszone mit einem im wesentlichen vorbestimmten Verbrennungszonendurchmesser um ihre Mündungsöffnung. Die Verbrennungszone einer Lanze ist diejenige Zone, in der im wesentlichen die Verbrennung des durch die Lanze zugeführten Zusatzbrennstoffes stattfindet. Anhand des Verbrennungszonendurchmessers ist das ungefähre Volumen und somit die Größe der Verbrennungszone definierbar.

Erfindungsgemäß ist die Anordnung und Anzahl der Lanzen derart gewählt, daß im Betriebszustand der Verbrennungszonendurchmesser 55 bis 100% des Abstands zwischen zwei Mündungsöffnungen benachbarter Lanzen entspricht. Werden beispielsweise die Lanzen in regelmäßigen Abständen derart entlang der im wesentlichen zylindrisch ausgebildeten Wandung angeordnet, daß sämtliche Mündungsöffnungen ins Zentrum des Wirbelschichtofens weisen und auf einer gemeinsamen Kreislinie positioniert sind, so ist die Anzahl der Lanzen so zu wählen, daß der Abstand zwischen zwei Mündungsöffnungen benachbarter Lanzen gleich oder etwas größer als der Verbrennungszonendurchmesser einer Lanze ist. Das bedeutet, daß benachbarte Lanzen derart nebeneinander angeordnet sind, daß sich die jeweiligen Verbrennungszonen beider Lanzen entweder berühren oder zumindest nah beieinander angeordnet sind. Entsprechend wird sichergestellt, daß eine gleichmäßige Energiezufuhr entlang der Kreislinie gewährleistet ist, auf der die Mündungsöffnungen der Lanzen angeordnet sind. Bei Einbau von Lanzen unterschiedlicher Länge, wobei immer abwechselnd eine lange neben einer kurzen Lanze angeordnet ist, kann die gleichmäßige Zufuhr von Zusatzenergie weiter verbessert werden.

Um den erfindungsgemäß engen Abstand der einzelnen Verbrennungszonen und somit der einzelnen Lanzen zu realisieren, wird bevorzugt die Anzahl der im Wirbelschichtofen verwendeten Lanzen im Gegensatz zum Stand der Technik erhöht. Der Einsatz einer Vielzahl von Lanzen hat den wesentlichen Vorteil, daß der Wirbelschicht weniger Energie über die Einzellanzen zugeführt werden muß, um der Wirbelschicht eine vorbestimmte Gesamtenergie zuzuführen. Auf diese Weise können lokale Überhitzungen in den jeweiligen Verbrennungszonen der Einzellanzen verhindert werden. Ferner ist die über eine Vielzahl von Lanzen zuführbare Verbrennungsluft ausreichend, um eine ordnungsgemäße Verbrennung des Zusatzbrennstoffes innerhalb des Wirbelbettes sicherzustellen.

Die Anordnung und Anzahl der Lanzen ist vorzugsweise derart gewählt, daß im Betriebszustand der Verbrennungszonendurchmesser 60 bis 80% des Abstands zwischen zwei Mündungsöffnungen benachbarter Lanzen entspricht, besser noch 65 bis 70%.

### Der erfindungsgemäße Wirbelschichtofen wird bevorzugt wie folgt betrieben:

Heizwertschwankungen des Klärschlammes können saisonal- oder betriebsbedingt sein. Saisonale Schwankungen sind längerfristig, betriebsbedingte Schwankungen hingegen meist kurzfristig.

Bei saisonalen Schwankungen wird deshalb der Anfahrbrenner zur Stützfeuerung betrieben. Bei den kurzzeitigen, betriebsbedingten Heizwertschwankungen übernehmen die Lanzen den Heizwertausgleich. Der Anfahrbrenner kann dabei so ausgelegt werden, daß eine optimale Anfahrzeit gewährleistet ist.

Bei saisonalen Schwankungen der Klärschlammqualität wird der Anfahrbrenner derart betrieben, daß die Änderungsgeschwindigkeit der Temperatur der Fluidisierungsluft den erlaubten Bereich nicht unter- bzw. überschreitet.

Die Lanzen können nach Anzahl und Kapazität so ausgelegt werden, daß zusammen mit dem Anfahrbrenner die betriebsbedingten Heizwertschwankungen aufgefangen werden können. Die Auslegungskriterien für die Lanzen beinhalten den Durchsatz des Zusatzbrennstoffes je Lanze und den Luftdurchsatz je Lanze.

Bevorzugt ist der Luftdurchsatz pro Lanze derart bemessen, daß zusammen mit der aus dem Düsenboden strömenden Wirbelluft der durch die Lanzen eingeleitete Zusatzbrennstoff innerhalb des Wirbelbettes überstöchiometrisch verbrannt wird, also daß dem Zusatzbrennstoff mehr Sauerstoff angeboten wird als die für die Verbrennung benötigte Minimalsauerstoffmenge. Auf diese Weise wird eine vollständige Verbrennung innerhalb des Wirbelbettes gewährleistet, also dort, wo die Energie benötigt wird.

Der erfindungsgemäße Wirbelschichtofen sowie das erfindungsgemäße Verfahren zum Betreiben des Wirbelschichtofens sind besonders gut dazu geeignet, selbst bei saisonalen oder kurzzeitigen Heizwertabsenkungen einen Verbrennungsbetrieb mit maximalem Schlammdurchsatz zu gewährleisten. Hierin liegt ein großer Vorteil gegenüber dem Stand der Technik.

Nachfolgend wird eine Ausführungsform des Wirbelschichtofens gemäß der vorliegenden Erfindung unter Bezugnahme auf die beiliegende Zeichnung genauer beschrieben. Daran ist:
- Fig. 1:: eine schematische Ansicht eines Wirbelschichtofens;
- Fig. 2A:: eine Querschnittansicht entlang der in Fig. 1 dargestellten Schnittlinie 2A-2A durch das Wirbelbett, wobei diese Figur eine herkömmliche Lanzenanordnung zeigt;
- Fig. 2B:: eine Querschnittansicht entlang der in Fig. 2A dargestellten Schnittlinie 2B-2B;
- Fig. 3A:: eine Querschnittansicht entlang der in Fig. 1 dargestellten Schnittlinie 3A-3A, wobei hier die erfindungsgemäße Anordnung der Lanzen gezeigt ist; und
- Fig. 3B:: eine Querschnittansicht entlang der in Fig. 3A dargestellten Schnittlinie 3B-3B.

Gleiche Bezugszeichen beziehen sich nachfolgend auf gleichartige Bauteile.

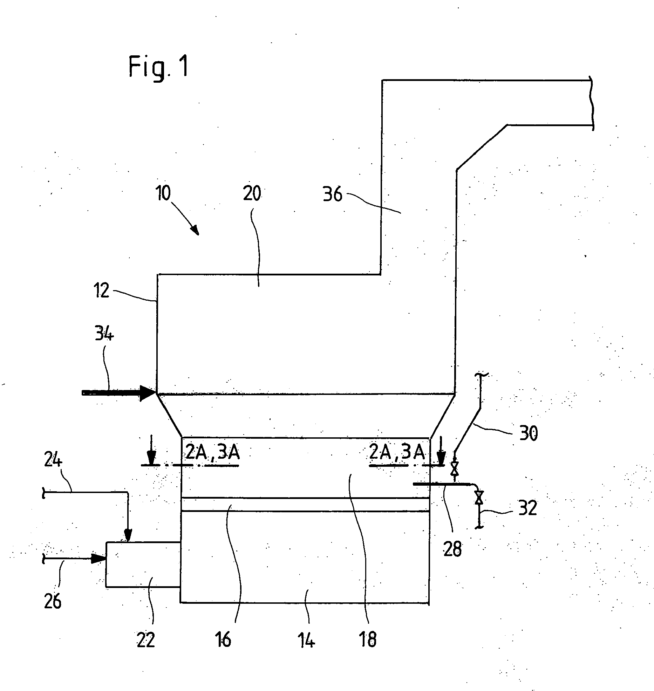

Fig. 1 zeigt eine schematische Ansicht eines Wirbelschichtofens 10, der eine im wesentlichen zylindrische Wandung 12 aufweist. In dem durch die Wandung 12 gebildeten Innenraum des Wirbelschichtofens 10 sind, von unten nach oben betrachtet, ein Windkasten 14, ein Düsenboden 16, ein Wirbelbett 18 und ein Freeboard 20 angeordnet, wobei sich der Innenraum des Wirbelschichtofens 10 vom Wirbelbett 18 zum Freeboard 20 konusförmig erweitert. Im Bereich des Windkastens 14 ist ein Anfahrbrenner 22 vorgesehen, zu dem eine Leitung 24 für die Zufuhr von Zusatzbrennstoff und eine Leitung 26 für die Zufuhr von Verbrennungsluft führen. In das Wirbelbett 18 münden mehrere Lanzen 28, von denen in Fig. 1 nur eine im Detail dargestellt ist. Auch den Lanzen 28 werden über entsprechende Leitungen 30 und 32 Zusatzbrennstoff und Luft zugeführt.

Während des Betriebs strömt Luft von dem Windkasten 14 durch den Düsenboden 16 und wirbelt die dort aufgeschüttete Schicht eines inerten Stoffes, wie beispielsweise Sand, auf und überführt diesen in einen Schwebe- bzw. Wirbelzustand. Klärschlamm wird oberhalb des Wirbelbettes zugeführt, was in Fig. 1 schematisch durch den Pfeil 34 dargestellt ist. Der Klärschlamm gelangt ins Wirbelbett 18 und wird dort verbrannt. Das entstehende Abgas strömt aufwärts und verläßt den Wirbelschichtofen 10 über einen Auslaßkanal 36. Das Rauchgas wird anschließend zur Energiegewinnung genutzt und am Ende der Prozeßkette gereinigt, bevor es in die Atmosphäre abgelassen wird.

Das in Fig. 1 dargestellte Wirbelschichtofenprinzip ist hinlänglich bekannt und soll daher nicht weiter erläutert werden.

Fig. 2A ist eine Querschnittansicht entlang der in Fig. 1 dargestellten Schnittlinie 2A-2A. Die in Fig. 2A dargestellte Lanzenanordnung entspricht einer herkömmlichen Lanzenanordnung, die bei vielen bekannten Wirbelschichtöfen eingesetzt wird.

Wie in Fig. 2A beispielhaft gezeigt ist, bildet die Wandung 12 des Wirbelschichtofens 10 einen Innenraum mit einem Durchmesser d₁ von 5100 mm. Entlang der Wandung 12 sind in gleichmäßigen Abständen a₁ = 1835 mm sechs Lanzen 28 angeordnet, die durch die Wandung 12 in den Innenraum des Wirbelschichtofens 10 in Höhe des in Fig. 1 dargestellten Wirbelbettes 18 ragen. Von den sechs Lanzen 28 ist der Einfachheit halber nur eine im Detail dargestellt. Die Lanzen 28 stehen von der Wandung 12 bemessen jeweils 800 mm in den Innenraum vor, so daß jede der Mündungsöffnungen 38 der Lanzen 28 auf einer Kreislinie mit einem Durchmesser d₂ von 3500 mm positioniert ist. Jede der Lanzen 28 definiert im Betriebszustand eine Verbrennungszone 40, in der der über die Lanzen 28 zugeführte Zusatzbrennstoff verbrannt wird. Die Verbrennungszone 40 hat hier jeweils einen Durchmesser d₃ von 500 mm.

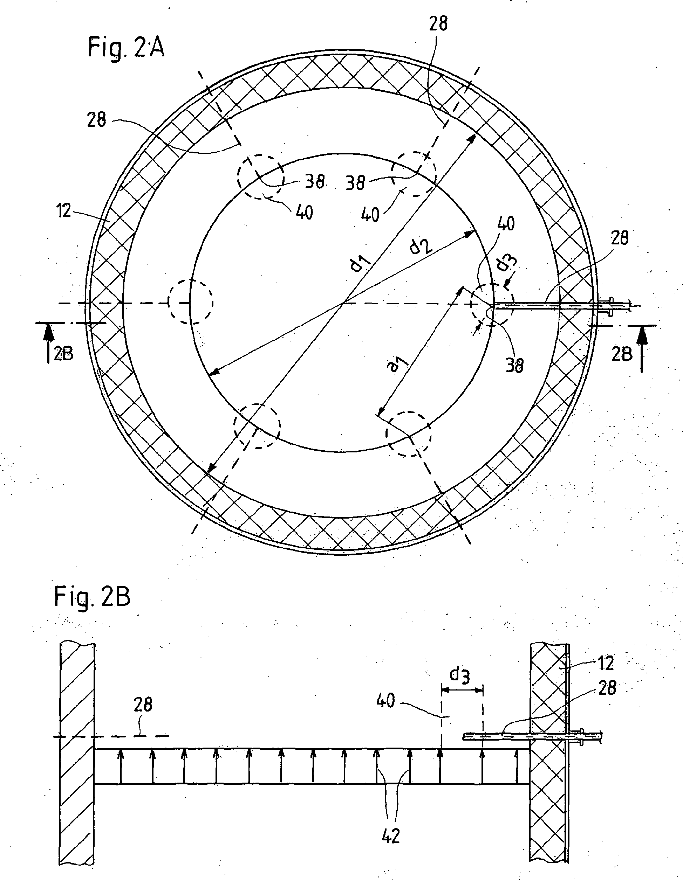

Diese Verbrennungszone 40 ist in Fig. 2B nochmals in einer anderen Perspektive gezeigt, nämlich entlang der in Fig. 2A dargestellten Schnittlinie 2A-2A. Innerhalb dieser Verbrennungszone 40 verbrennt ein wesentlicher Teil des durch die Lanzen 28 zugeführten Zusatzbrennstoffes. Die in Fig. 2B dargestellten Pfeile 42 repräsentieren die aus dem Düsenboden 16 des Wirbelschichtofens 10 austretende Wirbelluft.

Bei der in den Fign. 2A und 2B dargestellten herkömmlichen Anordnung der Lanzen tritt nun folgendes Problem auf:

Wie zuvor beschrieben wurde, kann eine konstante thermische Last des Klärschlammes in der Praxis nicht sichergestellt werden.

Bei großen Änderungen der thermischen Last des Klärschlammes wird der Bereich, in dem der Luftvolumenstrom sich ändern darf, unter- bzw. überschritten, sobald versucht wird, der Änderung der thermischen Last des Klärschlammes durch eine Änderung der über den Düsenboden 16 zugeführten Wirbelluft entgegenzutreten. Wird der untere Grenzwert des zulässigen Luftvolumenstroms unterschritten, so kollabiert das Wirbelbett, da nicht mehr ausreichend Wirbelluft zur Verfügung steht, um dieses ordnungsgemäß aufrechtzuerhalten. Wird hingegen der obere Grenzwert des zulässigen Luftvolumenstroms überschritten, so kann es zum Austrag des Bettmaterials kommen. Um die Klärschlammverbrennung auch in einem unteren Lastbereich betreiben zu können, wird deshalb versucht, die Temperatur im Wirbelbett und das Luftvolumen durch Zufeuerung von Stützbrennstoff konstant zu halten. Dies erfolgt in begrenztem Umfang durch Luftvorwärmung, den Betrieb des Anfahrbrenners 22 und den Betrieb der im Bereich des Wirbelbettes 18 installierten Lanzen 28. Der Anfahrbrenner 22 und die Lanzen 28 sind allerdings für das Anfahren der Wirbelschichtfeuerung und den Warmhaltebetrieb der Wirbelschichtfeuerung ausgelegt, also nicht für die bei Änderungen der thermischen Last des Klärschlammes erforderliche Zufeuerung.

Wird beispielsweise zum Ausgleich einer zu geringen thermischen Last des Klärschlammes der Anfahrbrenner 22 zu intensiv genutzt, so kann es zur Überhitzung bzw. zu unerlaubten Temperaturwechseln im Anfahrbrennerbereich kommen.

Werden hingegen die Lanzen 28 zur Stützfeuerung verwendet, um einer zu geringen thermischen Last des Klärschlammes entgegenzutreten, führt dies sehr schnell zu Sauerstoffmangel und zu lokalen Überhitzungen des Bettmaterials in der Verbrennungszone des Stützbrennstoffes. Der Stützbrennstoff verbrennt aus Sauerstoffmangel nicht vollständig im Wirbelbett 18, wo die Energie benötigt wird, sondern auch im Gasraum über dem Wirbelbett 18, also im Freeboard 20. Dies führt zu Überschreitungen der Freeboardtemperatur und es muß etwas Wasser zum Quenchen des Rauchgases eingedüst werden.

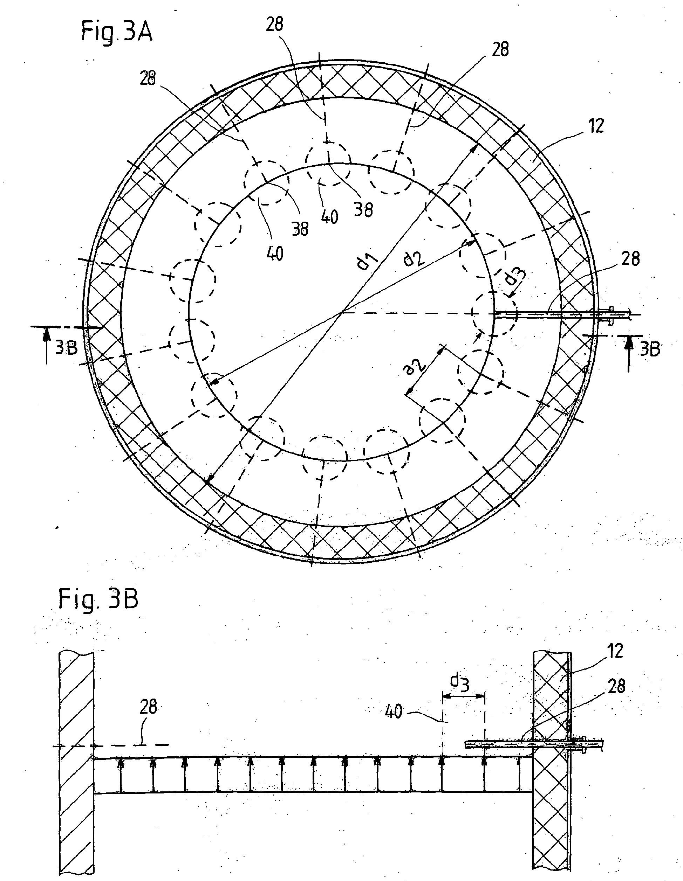

Die Fign. 3A und 3B zeigen nun eine modifizierte Lanzenanordnung gemäß der vorliegenden Erfindung. Fig. 3A ist eine Querschnittansicht entlang der in Fig. 1 dargestellten Schnittlinie 3A-3A. Die Abmessungen der Wandung 12 und der Kreislinie, auf der die Mündungsöffnungen 38 der Lanzen 28 positioniert sind, entsprechen denjenigen der Fig. 2A. Auch ist der Durchmesser d₃ der Verbrennungszone 40 jeder Lanze 28 derselbe wie in Fig. 3A. Dies ist auch in Fig. 3B gezeigt, die der Fig. 2B entspricht. Der wesentliche Unterschied zwischen der in den Fign. 3A und 3B dargestellten Konstruktion gegenüber der in den Fign. 2A und 2B dargestellten bekannten Konstruktion ist derjenige, daß gemäß Fig. 3A erfindungsgemäß wesentlich mehr Lanzen 28 angeordnet sind, nämlich beispielhaft 15. Dies führt dazu, daß der Abstand a₂ zwischen den Mündungsöffnungen 38 benachbarter Lanzen 28 beträchtlich verringert wird, so daß auch die Verbrennungszonen 40 benachbarter Lanzen 28 wesentlich näher aneinander angeordnet sind. Der Abstand a₂ beträgt hier 735 mm, also weniger als die Hälfte des in Fig. 2A gezeigten Abstandes a₁. Die Verwendung einer Vielzahl von Lanzen hat zum einen den Vorteil, daß die Energie, die von jeder einzelnen Lanze 28 in die Wirbelschicht 18 eingebracht werden muß, um dem Wirbelbett 18 eine vorbestimmte Gesamtenergie zuzuführen, geringer ist. Bei der Nutzung der Lanzen 28 zur Stützfeuerung wird auf diese Weise sichergestellt, daß lokale Überhitzungen des Bettmaterials in der Verbrennungszone 40 des Stützbrennstoffes vermieden werden. Ferner wird dem Wirbelbett 18 über die Lanzen 28 mehr Luft zugeführt, so daß stets eine überstöchiometrische Verbrennung gewährleistet werden kann. Somit verbrennt der Stützbrennstoff vollständig im Wirbelbett, wo die Energie benötigt wird. Einer Überschreitung der Freeboardtemperatur ist somit nicht zu erwarten, so daß auch kein Wasser zum Quenchen des Rauchgases eingedüst werden muß.

Heizwertschwankungen des Klärschlamms wird mit nachfolgend beschriebenen Betrieb des in den Fign. 3A und 3B dargestellten erfindungsgemäßen Wirbelschichtofens begegnet: Bei längerfristigen saisonalen Schwankungen des Klärschlammheizwertes wird der Anfahrbrenner 22 zur Stützfeuerung betrieben. Bei den kurzzeitigen, betriebsbedingten Heizwertschwankungen übernehmen die Lanzen 28 den Heizwertausgleich. Der Anfahrbrenner 22 ist dabei so auszulegen, daß eine optimale Anfahrzeit gewährleistet ist. Bei saisonalen Schwankungen der Klärschlammqualität wird der Anfahrbrenner 22 derart betrieben, daß die Änderungsgeschwindigkeit der Temperatur der Fluidisierungsluft den erlaubten Bereich nicht unter- bzw. überschreitet. Die Lanzen 28 sind nach Anzahl und Kapazität so auszulegen, daß mit dem Anfahrbrenner 22 zusammen die betriebsbedingten Heizwertschwankungen aufgefangen werden können. Die Auslegungskriterien für die Lanzen 28 beinhalten den Durchsatz des Zusatzbrennstoffes je Lanze 28 und den Luftdurchsatz je Lanze 28, so daß der Zusatzbrennstoff in dem Fluidisierungsbereich überstöchiometrisch verbrennt. Der Durchsatz des Zusatzbrennstoffes und der Luft wird von der zusätzlich benötigten Wärmemenge und des Sauerstoffgehaltes der Fluidisierungsluft bestimmt. Der Luftdurchsatz je Lanze 28 und damit die Austrittsgeschwindigkeit an den jeweiligen Mündungsöffnungen 38 soll mindestens so bemessen sein, daß der Queraustausch der zusätzlich eingebrachten Wärmemenge verbessert wird. Die Anzahl der Lanzen 28 wird durch die Geometrie des Wirbelschichtofens 10 und den Wärmeaustausch innerhalb des Wirbelbettes 18 bestimmt. Mit einer optimalen Anzahl von Lanzen 28 und einem optimalen Einbau lassen sich Heizwertschwankungen des Klärschlammes unverzüglich ausgleichen.

Es sollte klar sein, daß der in den Fign. 3A und 3B dargestellte erfindungsgemäße Wirbelschichtofen 10 nur als Beispiel dient und den Schutzbereich, der durch die beiliegenden Ansprüche definiert ist, nicht einschränkt. Insbesondere die Maßangaben sind nur als Erläuterungshilfen zu verstehen.

### Bezugszeichenliste

- 10: Wirbelschichtofen
- 12: Wandung
- 14: Windkasten
- 16: Düsenboden
- 18: Wirbelbett
- 20: Freeboard
- 22: Anfahrbrenner
- 24: Leitung
- 26: Leitung
- 28: Lanzen
- 30: Leitung
- 32: Leitung
- 34: Pfeil
- 36: Auslaßkanal
- 38: Mündungsöffnung
- 40: Verbrennungszone

## Patentansprüche

1. Wirbelschichtofen mit
- einer Wandung (12),
- einem Anfahrbrenner (22),
- einem Wirbelbett (18),
- einem unterhalb des Wirbelbetts (18) angeordneten Düsenboden (16) und
- oberhalb des Düsenbodens (16) am Innenumfang der Wandung (12) verteilte Lanzen (28), die in das Wirbelbett (18) münden und die zur Zufuhr von Zusatzbrennstoff in das Wirbelbett (18) dienen, wobei jede Lanze (28) im Betriebszustand eine Verbrennungszone (40) mit einem im wesentlichen vorbestimmten Verbrennungszonendurchmesser (d₃) um ihre Mündungsöffnung (40) definiert,
**dadurch gekennzeichnet, daß**
die Anordnung und Anzahl der Lanzen (28) derart gewählt ist, daß im Betriebszustand der Verbrennungszonendurchmesser (d₃) 55 bis 100% des Abstands (a₂) zwischen zwei Mündungsöffnungen (38) benachbarter Lanzen (28) entspricht.

2. Wirbelschichtofen nach Anspruch 1, wobei die Anordnung und Anzahl der Lanzen (28) derart gewählt ist, daß im Betriebszustand der Verbrennungszonendurchmesser (d₃) 60 bis 80% des Abstands (a₂) zwischen zwei Mündungsöffnungen (38) benachbarter Lanzen (28) entspricht.

3. Wirbelschichtofen nach Anspruch 1, wobei die Anordnung und Anzahl der Lanzen (28) derart gewählt ist, daß im Betriebszustand der Verbrennungszonendurchmesser (d₃) 65 bis 70% des Abstands (a₂) zwischen zwei Mündungsöffnungen (38) benachbarter Lanzen (28) entspricht.

4. Wirbelschichtofen nach einem der vorhergehenden Ansprüche, wobei die Lanzen (28) gleichmäßig weit in das Wirbelbett (18) ragen.

5. Wirbelschichtofen nach einem der Ansprüche 1 bis 3, wobei die Lanzen (28) verschieden weit in das Wirbelbett (18) ragen und immer abwechselnd eine lange neben einer kurzen Lanze (28) angeordnet ist.

6. Verfahren zum Betreiben eines Wirbelschichtofens nach einem der vorhergehenden Ansprüche, bei dem bei längerfristigen Schwankungen des Klärschlammheizwertes der Anfahrbrenner (22) und bei kurzzeitigen Schwankungen des Klärschlammheizwertes die Lanzen (28) zur Stützfeuerung verwendet werden.

7. Verfahren nach Anspruch 6, wobei der Luftdurchlaß pro Lanze (28) derart bemessen ist, daß zusammen mit der aus dem Düsenboden (16) strömenden Wirbelluft der durch die Lanzen (28) eingeleitete Zusatzbrennstoff innerhalb des Wirbel bettes (18) überstöchiometrisch verbrennt.

## Geänderte Patentansprüche

### Geänderte Patentansprüche gemäss Regel 86(2) EPÜ.

**1.** Verfahren zum Betreiben eines Wirbelschichtofens, wobei im Wirbelschichtofen eine stationäre Wirbelschicht erzeugt wird, **dadurch gekennzeichnet, daß** mittels oberhalb des Düsenbodens (16) am Innenumfang der Wandung (12) verteilter, in das Wirbelbett (18) mündende Lanzen (28) Zusatzbrennstoff in das Wirbelbett (18) so zugeführt wird, daß ein Verbrennungszonendurchmesser 55% bis 100% des Abstands zwischen zwei Mündungsöffnungen benachbarter Lanzen entspricht.

**2.** Verfahren nach Anspruch 1, **dadurch gekennzeichnet, daß** bei längerfristigen Schwankungen des Klärschlammheizwertes ein Anfahrbrenner (22) und bei kurzzeitigen Schwankungen des Klärschlammheizwertes die Lanzen (28) zur Stützfeuerung verwendet werden.

**3.** Verfahren nach Anspruch 1 oder 2, **dadurch gekennzeichnet, daß** der Luftdurchlaß pro Lanze (28) derart bemessen ist, daß zusammen mit der aus dem Düsenboden (16) strömenden Wirbelluft der durch die Lanzen (28) eingeleitete Zusatzbrennstoff innerhalb des Wirbelbettes (18) überstöchiometrisch verbrennt.

**4.** Verfahren nach einem der Ansprüche 1 bis 3, **dadurch gekennzeichnet, daß** der thermische Lastbereich zwischen 80% und 100% liegt.

**5.** Verfahren nach einem der Ansprüche 1 bis 4, **dadurch gekennzeichnet, daß** die Verbrennung in einem Temperaturbereich von 850 °C bis 1050 °C, bevorzugt in einem Bereich von 850 °C bis 950 °C, erfolgt.

**6.** Wirbelschichtofen mit
- einer Wandung (12),
- einem Wirbelbett (18),
- einem unterhalb des Wirbelbetts (18) angeordneten Düsenboden (16)
- einem unterhalb des Düsenbodens (16) angeordneten Anfahrbrenner (22),
**dadurch gekennzeichnet,**
**daß** oberhalb des Düsenbodens (16) am Innenumfang der Wandung (12) verteilte Lanzen (28) angeordnet sind, die in das Wirbelbett (18) münden und die zur Zufuhr von Zusatzbrennstoff in das Wirbelbett (18) dienen, wobei jede Lanze (28) im Betriebszustand eine Verbrennungszone (40) mit einem im wesentlichen vorbestimmten Verbrennungszonendurchmesser (d3) um ihre Mündungsöffnung (40) definiert und die Anordnung und Anzahl der Lanzen (28) derart gewählt ist, daß im Betriebszustand der Verbrennungszonendurchmesser (d₃) 55 bis 100% des Abstands (a₂) zwischen zwei Mündungsöffnungen (38) benachbarter Lanzen (28) entspricht.

**7.** Wirbelschichtofen nach Anspruch 6, **dadurch gekennzeichnet, daß** die Anordnung und Anzahl der Lanzen (28) derart gewählt ist, daß im Betriebszustand der Verbrennungszonendurchmesser (d₃) 60 bis 80% des Abstands (a₂) zwischen zwei Mündungsöffnungen (38) benachbarter Lanzen (28) entspricht.

**8.** Wirbelschichtofen nach Anspruch 6, **dadurch gekennzeichnet, daß** die Anordnung und Anzahl der Lanzen (28) derart gewählt ist, daß im Betriebszustand der Verbrennungszonendurchmesser (d₃) 65 bis 70% des Abstands (a₂) zwischen zwei Mündungsöffnungen (38) benachbarter Lanzen (28) entspricht.

**9.** Wirbelschichtofen nach einem der Ansprüche 6 bis 8, **dadurch gekennzeichnet, daß** die Lanzen (28) gleichmäßig weit in das Wirbelbett (18) ragen.

**10.** Wirbelschichtofen nach einem der Ansprüche 6 bis 9, **dadurch gekennzeichnet, daß** die Lanzen (28) verschieden weit in das Wirbelbett (18) ragen.

**11.** Wirbelschichtofen nach Anspruch 10, **dadurch gekennzeichnet, daß** und immer abwechselnd eine lange neben einer kurzen Lanze (28) angeordnet ist.
